Europäisches Patentamt

European Patent Office

Office européen des brevets

(19)

(11) Veröffentlichungsnummer: **0 073 268**
**B1**

(12) **EUROPÄISCHE PATENTSCHRIFT**

(45) Veröffentlichungstag der Patentschrift:
**04.09.85**

(51) Int. Cl.⁴: **F 15 B 13/043**, F 16 K 31/42

(21) Anmeldenummer: **81106845.1**

(22) Anmeldetag: **02.09.81**

(54) **Elektrohydraulische Regelung eines Stellkolbens.**

(43) Veröffentlichungstag der Anmeldung:
**09.03.83 Patentblatt 83/10**

(45) Bekanntmachung des Hinweises auf die Patenterteilung:
**04.09.85 Patentblatt 85/36**

(84) Benannte Vertragsstaaten:
**DE FR GB IT SE**

(56) Entgegenhaltungen:
**EP - A - 0 017 868**
**EP - A - 0 023 416**
**GB - A - 2 065 929**

**Ölhydraulik und Pneumatik, vol. 25 (1981), nr. 8, S. 617-624**

(73) Patentinhaber: **Vickers Systems GmbH,**
**Fröllngstrasse 41, D-6380 Bad Homburg (DE)**

(72) Erfinder: **Bender, Bernd, Ing. grad., Römerstrasse 8,**
**D-6302 Lich/Hessen 2 (DE)**

(74) Vertreter: **Blumbach Weser Bergen Kramer Zwirner**
**Hoffmann Patentanwälte et al, Sonnenbergerstrasse 43,**
**D-6200 Wiesbaden 1 (DE)**

## Beschreibung

Die Erfindung bezieht sich auf eine elektrohydraulische Regelung eines Stellkolbens, insbesondere Drosselkolben eines Hauptventils nach dem Oberbegriff des Anspruchs 1.

Bei einer derartigen bekannten elektrohydraulischen Regelung [Ölhydraulik und Pneumatik 25 (1981) Nr. 8, S. 618] ist zwischen der Hauptförderleitung und der Tankleitung mit Hilfe des Kolbenschiebers des Vorsteuerventils eine Drosselkette mit einer ersten und zweiten variablen Drossel gebildet, zwischen denen die Steuerleitung einmündet. Der Steuerstrom ist eine Funktion der Grösse dieser Drosseln und des hydraulischen Steuerdrucks; bei hohen Steuerdrücken steigt der Steuerstrom an, und es werden raschere Bewegungen des Drosselkolbens erzielt als im Falle von niedrigeren Steuerdrücken. Im Hinblick auf den elektronischen Regler sollten aber die Schalt- und Öffnungszeiten des Drosselkolbens nicht stark variieren. Bei raschen Bewegungen des Drosselkolbens treten ferner Regelschwingungen beim Übergang vom dynamischen in den statischen Regelbereich auf.

Man hat bereits versucht, die Bewegung des Kolbenschiebers des Vorsteuerventils zu dämpfen und hierzu einen Fortsatz am Kolbenschieber vorgesehen, der bei grossen Steuerausschlägen in eine Ablauföffnung eintaucht und dadurch zeitweise eine Drossel bildet, wodurch der ablaufende Hilfsstrom gestaut und der dadurch gebildete Niederdruck auf den Kolbenschieber entgegen seiner Auslenkung einwirken soll. Es hat sich aber herausgestellt, dass diese Einrichtung Anlass zu Pendelbewegungen des Kolbenschiebers gibt und die Regelung unbrauchbar macht. Man kann eine Begrenzung der Stellkolbengeschwindigkeit dadurch erzielen, dass der elektronische Regler das Stellorgan des Vorsteuerventils je nach den unterschiedlichen Drücken entsprechend steuert; diese Problemlösung ist aber teuer.

Der Erfindung liegt deshalb die Aufgabe zugrunde, eine elektrohydraulische Regelung eines Stellkolbens ohne grossen Aufwand so auszubilden, dass die hydraulischen Steuerströme weitgehend unabhängig vom Druckbereich sind, für welchen die Regelung angewendet wird, und dass beim Übergang von dynamischen in den statischen Regelbereich ein asymptotisches Einregelverhalten ohne Positionsübersteuerung erzielbar ist.

Die gestellte Aufgabe wird aufgrund der Massnahmen des Hauptanspruchs gelöst.

Bei der Erfindung ist die dritte Drossel ständig wirksam, so dass der Niederdruck-Kolbenraum mit einem gewissen hydraulischen Druck beaufschlagt ist, dessen Höhe auch davon abhängt, ob ein hydraulischer Steuerstrom zwischen Vorsteuerventil und Hauptventil fliesst, was dann der Fall ist, wenn das Hauptventil auf eine neue Drosselstellung eingestellt wird. Der hydraulische Steuerstrom führt z.B. zu einem zusätzlichen Druckabfall an der dritten Drossel, wodurch der Kolbenschieber in Richtung auf Vergrösserung des Querschnitts der ersten Drossel und Verkleinerung des Querschnitts der zweiten Drossel verschoben wird. Infolgedessen wird der vom Hauptventil zum Vorsteuerventil fliessende hydraulische Steuerstrom im Sinne einer Gegenkopplung beeinflusst. Bei höherem Druckniveau und damit grösserem Druckgefälle zur Tankleitung könnte zwar ein grösserer hydraulischer Steuerstrom über die zweite Drossel abfliessen, jedoch führt die Gegenkopplung dazu, dass die zweite Drossel relativ enger gemacht wird, so dass der abfliessende hydraulische Steuerstrom im wesentlichen konstant bleibt. Dies ist gleichbedeutend mit einer bestimmten Verstellgeschwindigkeit des Drosselkolbens und damit der Einstellzeit bei einem dynamischen Regelvorgang. Die Gegenkopplung hat noch eine weitere Auswirkung, nämlich die Tendenz der Rückführung des Kolbenschiebers, wenn dieser zur Auslösung eines dynamischen Regelvorgangs elektromagnetisch verschoben wird. Diese Rückführtendenz kann so eingestellt werden, dass sich der Kolbenschieber seiner neuen Einstellage gewissermassen asymptotisch annähert. Dadurch werden Regelschwingungen (Überschreiten und Unterschreiten der gewünschten neuen Regelposition) vermieden.

Ausgestaltungen und Weiterbildungen der Erfindung sind den Unteransprüchen zu entnehmen.

Ein Ausführungsbeispiel der Erfindung wird anhand der Zeichnung beschrieben. Dabei zeigt:

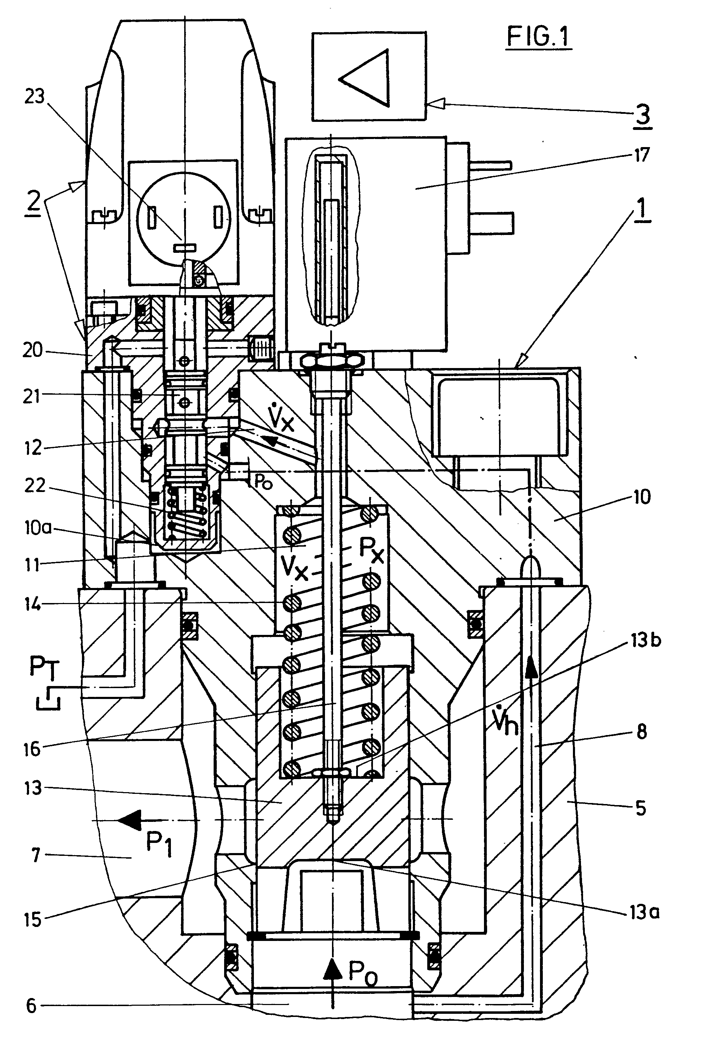

Fig. 1 eine elektrisch regelbare Drosselventilanordnung, teilweise geschnitten,

Fig. 2 eine vergrösserte Einzelheit aus Fig. 1,

Fig. 3 ein hydraulisches Schaltschema und

Fig. 4 ein Diagramm verschiedener Grössen über die Zeit.

Die elektrisch regelbare Drosselventilanordnung enthält als Hauptbestandteile ein Hauptventil 1, ein Vorsteuerventil 2 sowie einen elektronischen Regler 3 zur Steuerung des Vorsteuerventils 2.

Das Hauptventil 1 ist als Einsatzbauteil zum Einfügen in ein Gehäuse 5 ausgebildet, welches eine Hauptförderleitung mit einem zuführenden Kanal 6, einem abführenden Kanal 7 sowie einen Abzweigkanal 8 enthält. Das Hauptventil besitzt ein Einsatzgehäuse 10 mit einem Steuerraum 11 und einer Steuerleitung 12, einen Drosselkolben 13 und eine Schliessfeder 14. Der Kanal 6 bildet einen Förderdruckraum, der über einen wechselnd grossen Drosselquerschnitt 15 in den Kanal 7 übergeht. Am Drosselkolben 13 kann eine Förderdruckseite 13a und eine Steuerdruckseite 13b unterschieden werden, an welcher neben dem Steuerdruck auch die Kraft der Schliessfeder 14 angreift. Der Drosselkolben 13 ist ferner über eine Stange 16 mit einem Wegaufnehmer 17 gekoppelt, der als Teil des elektronischen Reglers 3 aufgefasst werden kann.

Das Vorsteuerventil 2 besitzt ein Einsatzgehäuse 20, welches in eine Stufenbohrung 10a des Gehäuses 10 in abdichtender Weise eingefügt ist. Innerhalb des Gehäuses 20 befindet sich ein Kolbenschieber 21 und eine Rückholfeder 22. Auf das Gehäuse 20 ist ein elektrischer Stellmagnet 23 aufgesetzt, der mit dem Kolbenschieber 21 verbunden ist und zu dessen Lageveränderung dient. Der Stellmagnet 23 und die Rückholfeder 22 bilden zusammen ein elektrisch beeinflussbares Stellorgan zur Einstellung der Lage des Kolbenschiebers 21.

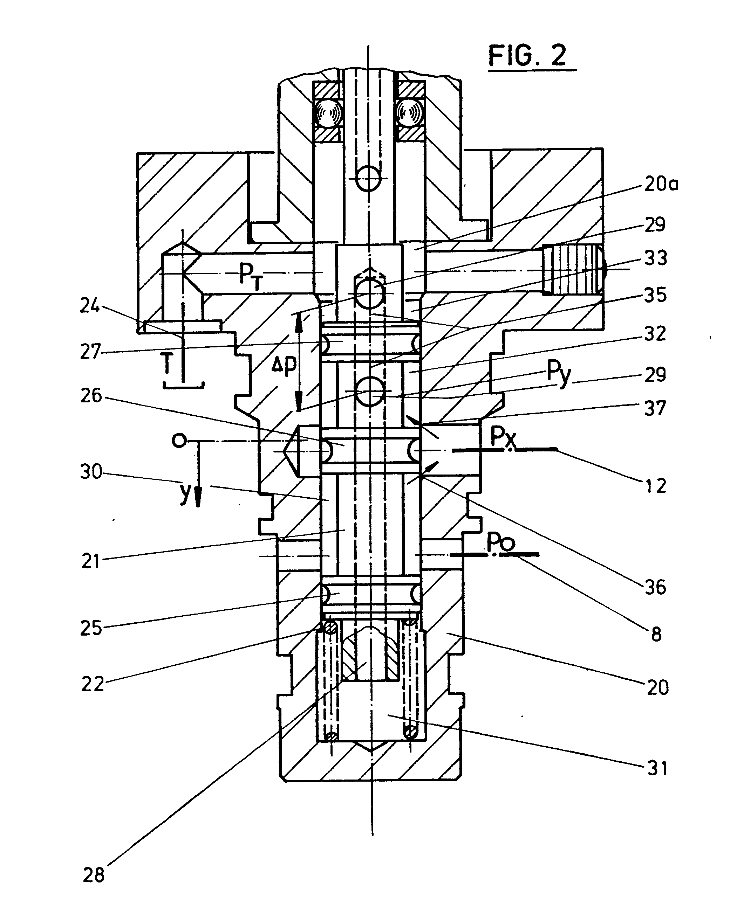

Das Gehäuse 20 und der Kolbenschieber 21 des Vorsteuerventils 2 sind in Fig. 2 näher dargestellt.

Das Gehäuse 20 besitzt eine Längsbohrung 20a als Gehäuseinnenraum und drei Querbohrungen, von denen die eine mit einer Tankleitung 24, die andere mit der Steuerleitung 12 und die dritte mit der Abzweigung 8 verbunden sind. Der Kolbenschieber 21 weist drei Kolbenbunde 25, 26, 27 sowie eine Längsbohrung 28 und zwei Querbohrungen 29 auf, wodurch der Raum 20a in einen Förderdruckraum 30, einen ersten Niederdruckkolbenraum 31, einen zweiten Niederdruckkolbenraum 32 und einen drucklosen Raum 33 unterteilt werden, wovon die Niederdruckkolbenräume 31, 32 über die Bohrungen 28, 29 in hydraulischer Verbindung miteinander stehen.

Das vordere Ende der Bohrung 28 und die beiden Querbohrungen 29 überbrücken den Kolbenbund 27 und bilden eine feste Laminardrossel 35. Es ist natürlich auch möglich, die Bohrung 28 relativ weit zu machen und eine Blende als Bernoulli-Drossel einzusetzen.

Der Steuerkanal 12 ist ein wenig breiter als der Bund 26, so dass aus der Leitung 8 gespeist ein Hilfsstrom $V_h$ vom Raum 30 in den Raum 32 und von dort über die konstante Drossel 35 in den drucklosen Raum 33 fliesst. Durch die Kanten des Kanals 12 und des Bundes 26 werden variable Drosseln 36 und 37 gebildet, wobei einer Zunahme des Drosselquerschnitts der Drossel 36 einer Abnahme des Drosselquerschnitts der Drossel 37 entspricht und umgekehrt. Es versteht sich, dass die variablen Drosseln 36 und 37 auch auf andere, an sich bekannte Weise realisiert werden können.

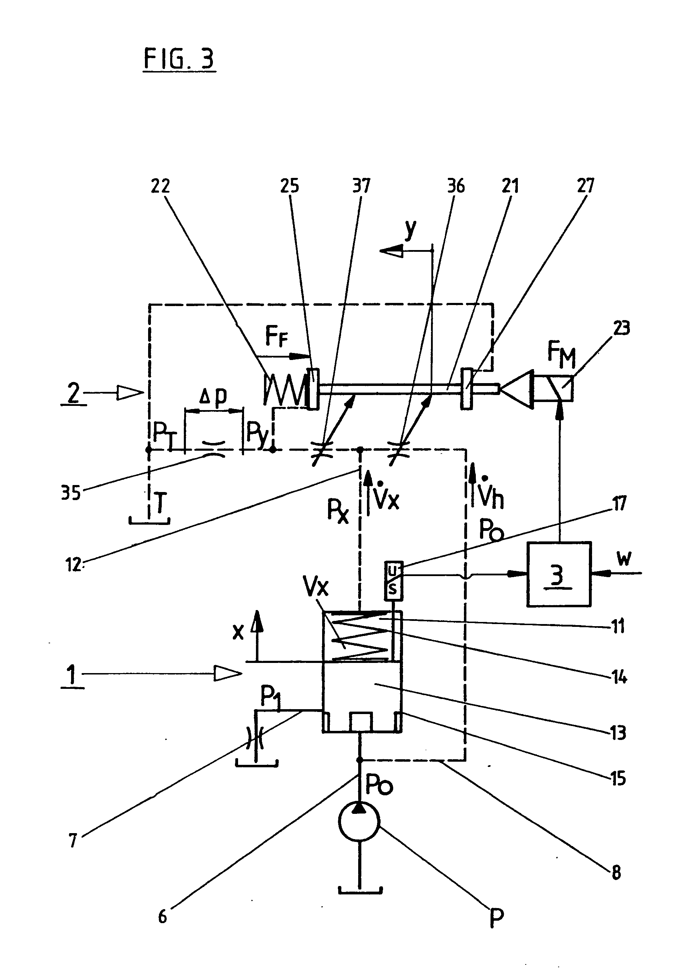

Die Wirkungsweise der Drosselventilanordnung wird anhand des Schaltschemas nach Fig. 3 erläutert. Von einer Pumpe P wird Hydraulikflüssigkeit mit dem Druck $p_0$ dem Hauptventil 1 zugeführt, welches den Hauptförderstrom so drosselt, dass sich in der Leitung 7 ein Druck von $p_1$ einstellt. Über die Leitung 8 fliesst ständig ein Hilfsstrom $V_h$ über die durch die Drosseln 36, 37, 35 gebildete Drosselkette zum Tank T, wobei der Druck $p_0$ hinter der Drossel 36 auf den Wert $p_x$, hinter der Drossel 37 auf den Wert $p_y$ und hinter der Drossel 35 auf den Wert $p_t$ abgebaut wird. Der Druck $p_y$ liegt am Bund 25 in Kraftrichtung der Feder 22 an, während der Druck $p_t$ (gewöhnlich 0) am Kolbenbund 27 entgegen der Federwirkung anliegt. Der Kolbenschieber 21 wird durch die Kraft des geregelten Elektromagneten 23 im wesentlichen im Gleichgewicht gehalten (statischer Regelbetrieb). Der elektronische Regler 3 kann beispielsweise daraufhin programmiert sein, $p_1$ auf einem ersten konstanten Wert zu halten. Bei einer Abweichung von diesem Soll-Druck wird der dem Elektromagneten 23 zugeführte Strom entsprechend geändert, so dass es zu einer leichten Verschiebung des Kolbenschiebers 21 kommt, wodurch wiederum die Drosselquerschnitte der variablen Drosseln 36 und 37 geändert werden. Dadurch ändert sich der Druck $p_x$ und der Drosselkolben 13 wird dementsprechend verschoben, bis die Abweichung des Drucks $p_1$ vom Soll-Wert behoben ist.

Der elektronische Regler 3 kann auch so programmiert werden, dass der Drosselquerschnitt 15 des Drosselkolbens 13 unabhängig von Störgrössen konstant in der vorgegebenen Lage x gehalten wird.

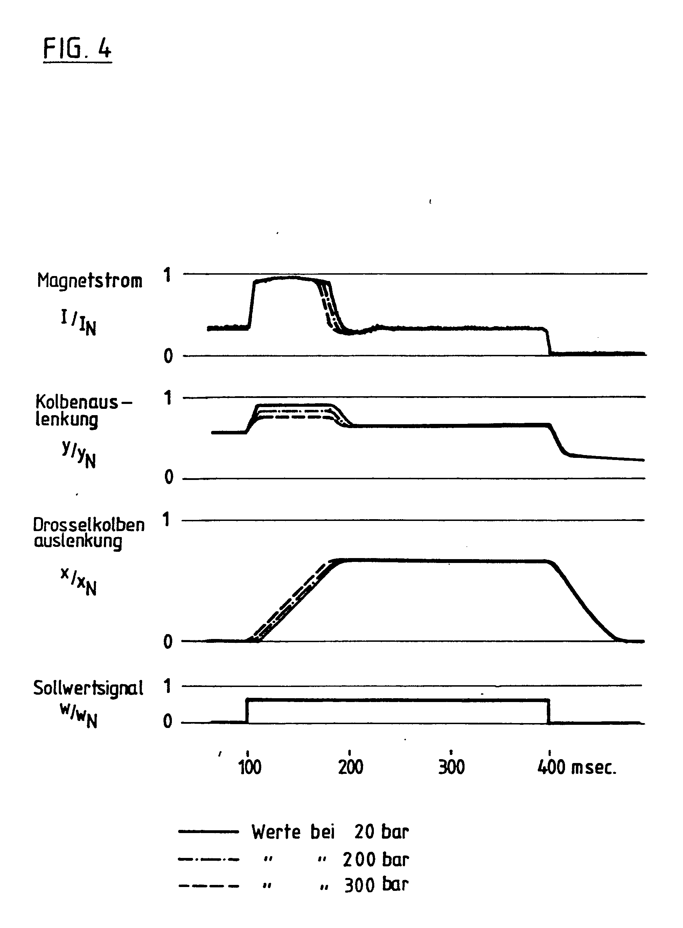

Das dynamische Regelverhalten der Schaltung nach Fig. 3 wird unter Zuhilfenahme des Diagramms nach Fig. 4 erläutert. Es sei angenommen, dass dem Sollwertsignal ein positiver Führungssprung erteilt wird, wie in der untersten Zeile der Fig. 4 bei 100 ms dargestellt. Der Regler 3 geht dann von seinem normalen Regelbetrieb ab und gibt einen Impuls von beispielsweise 120 ms Dauer in der Höhe des Nennstroms an den Elektromagneten 23 ab, wie in der obersten Zeile der Fig. 4 dargestellt. Dadurch wird die Stellung y des Kolbenschiebers 21 verändert, wie in Zeile 3 dargestellt. Dies bewirkt eine Verkleinerung des Drosselquerschnitts 36 und eine Vergrösserung der Drosselquerschnitts 37. Da der Hilfsstrom $V_h$ dadurch abgeschnürt wird, sinkt der Druck $p_x$, und der Drosselkolben 13 bewegt sich infolge des Drucks $p_0$ in der angegebenen positiven x-Richtung (Zeile 2 der Fig. 4). Dadurch entsteht ein Verdrängungsstrom $V_x$, der über die erweiterte Drossel 37 und die feste Drossel 35 abfliesst und an dieser zu einem Druckgefälle $\Delta p$ führt. Dieses wirkt auf die Kolbenfläche 25 ein und verschiebt den Kolbenschieber 21 in Richtung auf die Ausgangslage. Somit wird der Drosselquerschnitt 36 wieder erweitert und der Drosselquerschnitt 37 verengt. Das erzeugte Druckgefälle $\Delta p$ ist also im Sinne einer negativen Rückkopplung wirksam und führt zu einer Art Stromregelung, wie nachfolgend erläutert.

In Fig. 4 sind die gemessenen Werte bei 20 bar mit ausgezogenen Linien dargestellt, bei 200 bar in strichpunktierten Linien und bei 300 bar gestrichelt. Wie ersichtlich, führt bei höherem Druck der elektrische Stromimpuls an den Elektromagneten 23 nicht zu einer grossen Auslenkung y des Kolbenschiebers 21 und damit zu einer vergleichsweise geringen Änderung der Drosselquerschnitte 36 und 37. Bei niedrigen Systemdrücken wird also die variable Drossel 37 relativ weiter geöffnet als bei hohen Systemdrücken. Bei niedrigen Systemdrücken ist die Antriebskraft des Drosselkolbens 13 in x-Richtung relativ klein, und die Drossel 37 relativ gross, bei hohen Systemdrücken ist die Verschiebungskraft gross und der Drosselquerschnitt 37 klein, so dass für beide betrachteten Fälle der verdrängte Steuerstrom $V_x$ etwa gleich bleibt, wie die gute Übereinstimmung der Steigung der $x/x_n$-Linie ergibt.

Bemerkenswert ist ferner, dass die Verschiebung des Drosselkolbens 13 praktisch ohne Regelpendelungen vor sich geht. Die neue Sollstellung des Drosselkolbens 12 wird gewissermassen «asymptotisch» erreicht. Die Zeit, in welcher der Steuerstrom $V_x$ fliesst, beträgt etwa 200 ms, wobei die Abweichungen für hohe und niedrige Systemdrücke unbedeutend sind. Solche konstante Schaltzeiten sind für den elektronischen Regelkreis 3 erwünscht, da man nach dieser Schaltzeit mit zuverlässigen hydraulischen Messwerten rechnen kann, die dem Regler zuzuführen sind.

Die Länge der Schaltzeit des Drosselkolbens 13 kann durch entsprechende Wahl der festen Drossel 35 und der Kraft der Rückholfeder 22 sowie der Magnetkraft des Elektromagneten 23 bestimmt werden; von diesen Grössen ist vor allem die Weite der Drossel 35 leicht einstellbar, ebenso die Kraft und Charakteristik der Feder 22. Man hat so ein bequemes Mittel in der Hand, den jeweiligen hydraulischen Schaltkreis an die Erfordernisse der Praxis anzupassen.

Wie aus dem Diagramm nach Fig. 4 ersichtlich, geht der Regler 3 nach Abgabe des Stromimpulses wieder in seinen statischen Regelbetrieb über, um auf das System einwirkende Störgrössen auszuregeln. Zum Zeitpunkt 400 ms sei angenommen, dass erneut ein Führungssprung auftreten soll, und zwar soll das Sollwertsignal auf 0 gestellt werden. Der Regler 3 unterbricht daraufhin die Stromzuführung zum Elektromagneten 23, so dass die Rückholfeder 22 den Kolbenschieber 21 rückstellt, wodurch die Drossel 36 erweitert und die Drossel 37 verengt werden. Dadurch steigt der Druck px an, und der Drosselkolben 13 wird in seine Schliessstellung verschoben.

Der Ausdruck «Stellkolben» in den Ansprüchen ist in seiner allgemeinsten Bedeutung zu verstehen, d.h. es soll sich um eine hydraulische Einrichtung mit einem einzustellenden Kolben 13 handeln. Dieser kann also der Verstellkolben einer variablen Pumpe, eines proportionalen Wegeventils oder dergleichen sein und ist nicht auf die Drosselfunktion beschränkt. Demgemäss kommt es nicht darauf an, in welcher Weise die erste Kraft auf der Kolbenseite 13a erzeugt wird, ob durch einen Förderdruck im Förderdruckraum 6 oder durch eine Feder im Falle des Verstellkolbens einer variablen Pumpe. Je nach der Anwendung wird die zweite Kraft auf der Kolbenseite 13b rein hydraulisch oder in Kombination mit einer Feder 14 erzeugt.

### Patentansprüche

1. Elektrohydraulische Regelung eines Stellkolbens (13), insbesondere Drosselkolbens eines Hauptventils (1), enthaltend den verschiebbaren Stellkolben (13) als einzustellendes Glied, ein Vorsteuerventil (2) zur Steuerung des Stellkolbens (13), sowie einen elektronischen Regler (3) zur Steuerung des Vorsteuerventils (2); wobei auf der einen Seite (13a) des Stellkolbens (13) eine erste Kraft einwirkt und auf der anderen Seite (13b) eine zweite, entgegengesetzt gebildete Kraft angreift, die wenigstens teilweise hydraulisch durch einen Steuerdruck ($p_x$) in einem vom Stellkolben (13) begrenzten Steuerraum (11) erzeugt wird; wobei das Vorsteuerventil (2) eine Drosselkette (35, 36, 37) mit zwei variablen Drosseln (36, 37) für einen von einer Hauptförderleitung (6) zu einer Tankleitung (24) führenden Hilfsstrom ($V_h$), einen Kolbenschieber (21) zur gegenläufigen Einstellung der variablen Drosseln (36, 37) der Drosselkette und ein elektrisch beeinflussbares Stellorgan (22, 23) zur Einstellung der Lage des Kolbenschiebers (21) aufweist; und wobei die erste variable Drossel (36) zwischen einer Abzweigung (8) von der Hauptförderleitung (6) und einer den Steuerraum (11) und das Vorsteuerventil (2) verbindenden Steuerleitung (12) liegt, die bei Regelverstellungen des Stellkolbens (13) einen Steuerstrom ($V_x$) führt, und die zweite variable Drossel (37) zwischen der Steuerleitung (12) und einem Niederdruck-Kolbenraum (32) angeordnet ist; gekennzeichnet durch eine dritte, ständig wirksame, feste Drossel (35), die zwischen dem Niederdruck-Kolbenraum (32) und der Tankleitung (24) in der Drosselkette liegt und eine am Kolbenschieber (21) wirksame Druckdifferenz ($\Delta p$) erzeugt, die diesen (21) im Sinne der Rückführung beaufschlagt, wobei bei grossem Druckgefälle zwischen Hauptförderleitung (6) und Tankleitung (24) eine entsprechend starke Rückführungskraft und bei kleinem Druckgefälle eine entsprechend schwache Rückführungskraft erzeugt wird mit der Folge, dass die erste Drossel (36) entsprechend stärker oder schwächer vergrössert, die zweite Drossel (37) entsprechend stärker oder schwächer verengt und der Steuerstrom ($V_x$) im Sinne eines gewünschten konstanten Wertes geregelt wird.

2. Regelung nach Anspruch 1, dadurch gekennzeichnet, dass der Niederdruck-Kolbenraum (32) am Umfang des Kolbenschiebers (21) zwischen zwei Kolbenbunden (26, 27) angeordnet ist, wobei der eine Kolbenbund (27) durch die dritte Drossel (35) überbrückt wird und der andere Kolbenbund (26) mit seinen Steuerkanten die erste und zweite Drossel (36, 37) bildet.

3. Regelung nach Anspruch 2, dadurch gekennzeichnet, dass im Kolbenschieber (21) eine Längsbohrung (28) und zwei Querbohrungen (29) vorgesehen sind, welche den Niederdruck-Kolbenraum (32) sowohl mit einem die wirksame Rückstellfläche des Kolbenschiebers (21) begrenzenden weiteren Niederdruck-Kolbenraum (31) als auch mit einem mit der Tankleitung (24) verbundenen Raum (33) verbinden, wobei ein Abschnitt oder ein Einsatz zwischen beiden Querbohrungen (29) die dritte Drossel (35) bildet.

4. Regelung nach Anspruch 1, 2 oder 3, dadurch gekennzeichnet, dass die dritte Drossel (35) als Laminardrossel ausgebildet ist.

5. Regelung nach Anspruch 1, 2 oder 3, dadurch gekennzeichnet, dass die dritte Drossel (35) als Bernoulli-Blende ausgebildet ist.

6. Regelung nach einem der Ansprüche 1 bis 5, mit einer Rückholfeder (22) als Teil des elektrisch beeinflussbaren Stellorgans (22, 23), dadurch gekennzeichnet, dass die Grösse der Kolbenfläche (25) des Kolbenschiebers (21) im weiteren Niederdruck-Kolbenraum (31), die Grösse der dritten Drossel (35) und die Kraft der Rückholfeder (22) im Hinblick auf den gewünschten konstanten Steuerstrom ($V_x$) vorbestimmter Grösse im dynamischen Regelbetrieb abgestimmt sind.

7. Regelung nach einem der Ansprüche 1 bis 6, dadurch gekennzeichnet, dass der elektronische Regler (3) einen Wegaufnehmer (17) umfasst, der an den Stellkolben (13) gekoppelt ist.

### Claims

1. Electro-hydraulic control system for an actuating piston (13) and especially the throttle piston of a main valve (1), containing the moveable actuating piston (13) as an element to be adjusted, a pilot valve (2) for controlling the actuating piston (13) and an electronic controller (3) for controlling the pilot valve (2); a first force acting on the one side (13a) of the actuating piston (13) and a second, oppositely directed force acting on the other side (13b), which is at least partially hydraulically generated by a control pressure ($P_x$) in a control space (11) limited by the actuating piston (13); the pilot valve (2) being provided with a throttle chain (35, 36, 37) containing two variable throttles (36, 37) for an auxiliary ($V_h$) leading from a main supply line (6) to a tank line (24), a piston slider (21) for the opposing adjustement of the variable throttles (36, 37) of the throttle chain and an electrically controllable actuating element (22, 23) for adjusting the position of the piston slider (21); and the first variable throttle (36) being located between a branch (8) from the main supply line (6) and a control line (12) which connects the control space (11) and the pilot valve (2) and which carries a control flow ($V_x$) during controlling adjustments of the actuating piston (13), and the second variable throttle (37) being arranged between the control line (12) and a low-pressure piston space (32); characterised by a third, continuously effective fixed throttle (35) which is located between the low-pressure piston space (32) and the tank line (24) in the throttle chain and generates a pressure difference ($\Delta p$) which is effective at the piston slider (21) and which loads the latter (21) in the direction of returning it, a correspondingly strong returning force being generated with a large pressure gradient between the main supply line (6) and the tank line (24) and a correspondingly weak returning force being generated with a small pressure gradient, with the consequence that the first throttle (36) is correspondingly more or less enlarged, the second throttle (37) is correspondingly more or less constricted and the control flow ($V_x$) is regulated towards a desired constant value.

2. Control system according to claim 1, characterised in that the low-pressure piston space (32) is arranged at the periphery of the piston slider (21) between two piston collars (26, 27), the one piston collar (27) being bridged by the third throttle (35) and the other piston collar (26) forming the first and second throttle (36, 37) with its control edges.

3. Control system according to claim 2, characterised in that in the piston slider (21) a longitudinal drilled hole (28) and two transverse drilled holes (29) are provided which join the low-pressure piston space (32) both to an other low-pressure piston space (31) limiting the effective returning area of the piston slider (21) and to a space (33) connected with the tank line (24), the third throttle (35) being formed by a section or an insert between the two transverse drilled holes (29).

4. Control system according to claim 1, 2 or 3, characterised in that the third throttle (35) is constructed as a laminar throttle.

5. Control system according to claim 1, 2 or 3, characterised in that the third throttle (35) is constructed as a Bernoulli diaphragm.

6. Control system according to one of claims 1 to 5, containing a restoring spring (22) as a part of the electrically controllable actuating element (22, 23), characterised in that the size of the piston area (25) of the piston slider (21) in the further low-pressure piston space (31), the size of the third throttle (35) and the force of the restoring spring (22) are matched with respect to the desired constant control flow ($V_x$) of a predetermined magnitude in the dynamic control operation.

7. Control system according to one of claims 1 to 6, characterised in that the electronic controller (3) comprises a displacement pickup (17) wich is coupled to the actuating piston (13).

## Revendications

1. Régulation électro-hydraulique d'un piston de réglage (13) en particulier du piston d'étranglement de la section de passage d'une soupape principale (1), qui comprend le piston de réglage (13) mobile en translation en qualité d'organe à positionner, une soupape pilote (2) servant à commander le piston de réglage (13) ainsi qu'un régulateur électronique (3) servant à commander la soupape pilote (2), cependant qu'une première force agit sur une face (13a) du piston de réglage (13) et qu'une deuxième force, orientée dans le sens opposé, attaque la deuxième face (13b), cette deuxième force étant engendrée au moins partiellement par voie hydraulique, par une pression de commande ($p_x$) dans une chambre de commande (11) limitée par le piston de réglage (13); la soupape pilote (2) comprenant une chaîne d'étranglements (35, 36, 37) comportant elle-même deux étranglements variables (36, 37) qui agissent sur un courant auxiliaire ($V_h$) qui s'écoule d'une conduite d'alimentation principale (6) à une conduite de retour à la bâche (24), un piston tiroir (21) servant à régler l'un en sens inverse de l'autre les étranglements variables (36, 37) de la chaîne d'étranglements; et un organe de réglage commandé électriquement (22, 23) servant à régler la position du piston tiroir (21), et le premier étranglement variable (36) étant intercalé entre une dérivation (8) piquée sur la conduite d'alimentation principale (6) et une conduite de commande (12) qui relie la chambre de commande (11) à la soupape pilote (2), cette conduite de commande conduisant un courant de commande ($V_x$ en présence de modifications du positionnement du piston de réglage (13), et le deuxième étranglement variable (37) étant interposé entre la conduite de commande (12) et une chambre à basse pression du piston (32); caractérisée par un troisième étranglement fixe (35), effectif en permanence, qui est interposé entre la chambre à basse pression (32) du piston et la conduite de retour à la bâche (24), dans la chaîne d'étranglements et produit une différence de pression ($\Delta p$) agissant sur le piston tiroir (21) qui sollicite ce piston tiroir (21) dans le sens du rappel, cependant que, en présence d'un grand gradient de pression entre la conduite d'alimentation principale (6) et la conduite de retour à la bâche (24), il s'engendre une force de retour d'autant plus forte et que, en présence d'un petit gradient de pression, il s'engendre une force de rappel d'autant plus faible, avec pour conséquence que le premier étranglement (36) est agrandi d'autant plus fort ou d'autant plus faiblement, que le deuxième étranglement (37) est rétréci d'autant plus fort ou d'autant plus faiblement et que le courant de commande ($V_x$) est réglé dans le sens d'une valeur constante désirée.

2. Régulation selon la revendication 1, caractérisée en ce que la chambre à basse pression (32) du piston est disposée sur la périphérie du piston tiroir (21) entre deux cordons (26, 27) du piston, l'un des cordons (27) du piston étant contourné par le troisième étranglement (35) et l'autre cordon (26) formant le premier et le deuxième étranglements (36, 37) au moyen de ses bords de commande.

3. Régulation selon la revendication 2, caractérisée en ce que, dans le tiroir (21), sont prévus un perçage longitudinal (21) et deux perçages transversaux (29) qui relient la chambre à basse pression (32) du piston, à la fois à une autre chambre à basse pression (31) du piston qui limite la surface de rappel effective du piston tiroir (31) et à une chambre (33) reliée à la conduite de retour à la bâche (24), cependant qu'un segment ou une insertion prévu entre les deux perçages transversaux (29) forme le troisième étranglement (35).

4. Régulation selon la revendication 1, 2 ou 3, caractérisée en ce que le troisième étranglement (36) constitue un étranglement laminaire.

5. Régulation selon la revendication 1, 2 ou 3, caractérisée en ce que le troisième étranglement (35) est constitué par un diaphragme de Bernoulli.

6. Régulation selon l'une quelconque des revendications 1 à 5, comprenant un ressort de rappel (22) en tant que partie de l'organe de réglage (22, 23) commandé électriquement, caractérisée en ce que la grandeur de la surface de piston (25) du piston tiroir (21) qui est logée dans l'autre chambre à basse pression (31) du piston, la grandeur du troisième étranglement (35) et la force du ressort de rappel (25) sont fixées, en fonction du courant de commande constant désiré ($V_x$) à une valeur prédéterminée dans le régime de réglage dynamique.

7. Régulation selon l'une quelconque des revendications 1 à 6, caractérisée en ce que le régulateur électronique (3) comprend un capteur de course (17) qui est couplé au piston de réglage (7).

FIG.1

# FIG. 2

# FIG. 3

## FIG. 4

| | | |
|---|---|---|
| ——————— | Werte bei | 20 bar |
| —.——.— | " " | 200 bar |
| ————— | " " | 300 bar |